# EUROPÄISCHE PATENTANMELDUNG

(11) **EP 4 335 768 A1**
(43) Veröffentlichungstag der Anmeldung: **13.03.2024**
(21) Anmeldenummer: 23184043.0
(22) Anmeldetag: 07.07.2023
(51) Int. Cl.: B65C 9/40

(54) **VERFAHREN ZUR PRODUKTIONSÜBERWACHUNG EINER ETIKETTIERMASCHINE UND ETIKETTIERMASCHINE ZUR ETIKETTIERUNG VON BEHÄLTERN**

(30) Priorität: 09.09.2022 DE 102022123055
(71) Anmelder: Krones AG, 93073 Neutraubling (DE)
(72) Erfinder: SCHERL, Stefan, 93073 Neutraubling (DE); DOMEIER, Bernhard, 93073 Neutraubling (DE); TESAR, Veronika, 93073 Neutraubling (DE); KETTERL, Andreas, 93073 Neutraubling (DE); KRAUS, Andreas, 93073 Neutraubling (DE)
(74) Vertreter: Grünecker Patent- und Rechtsanwälte PartG mbB

(57) **Zusammenfassung**

Beschrieben wird ein Verfahren zur Produktionsüberwachung einer Etikettiermaschine (100) und eine Etikettiermaschine zur Etikettierung von Behältern (1), mit einem Transportmittel (2) zur laufenden Bereitstellung der Behälter, wenigstens einem Etikettieraggregat (3, 4) zur Übergabe von Etiketten (5) an die Behälter und wenigstens einem Leimspeicher (8, 9) zur laufenden Bereitstellung von Leim (10) zur Befestigung der Etiketten an den Behältern. Demnach misst man den Füllzustand (14, 15) des Leimspeichers und eine Maschinenleistung des Transportmittels und/oder des Etikettieraggregats laufend und berechnet auf dieser Grundlage wenigstens eine Restlaufzeit (19, 21), die angibt, wie lange man mit dem Füllzustand bei einem angenommenen weiteren Verlauf der Maschinenleistung (16) noch etikettieren kann. Die Ausgabe der Restlaufzeit erleichtert eine kontinuierliche Produktionsplanung und ermöglicht einen effizienten Personaleinsatz für erforderlichen Nachschub von Verbrauchsmaterialien.

## Beschreibung

Die Erfindung betrifft ein Verfahren zur Produktionsüberwachung einer Etikettiermaschine und eine Etikettiermaschine zur Etikettierung von Behältern.

Bekanntermaßen werden Behälter wie Getränkeflaschen in Etikettiermaschinen industriell etikettiert, indem die Behälter von einem Transportmittel, beispielsweise einem Behälterkarussell, laufend, also in Form eines Produktstroms, bereitgestellt und Etiketten von wenigstens einem Etikettieraggregat an den Behältern aufgeklebt werden. Dort werden die Etiketten laufend von wenigstens einem Etikettenspeicher beispielsweise vereinzelt als Stapel oder in noch nicht vereinzelter Form als Etikettenbänder auf Rollen bereitgestellt. Der Etikettenspeicher umfasst hierfür in der Regel wechselbare Magazine für blattförmige Etiketten oder abwechselnd arbeitende Abspulvorrichtungen für Etikettenbandrollen optional auch mit einem Rollenmagazin zum automatischen Nachschub und Wechsel von Etikettenbandrollen.

Ferner werden die Etiketten entweder mit Kaltleim oder Heißleim beschichtet, um sie an den Behältern zu befestigen. Der Leim wird dann entweder bei Raumtemperatur in auswechselbaren Behältern bereitgestellt oder in einem fest installierten Leimtank aufgeschmolzen und von dort entnommen. Der Leim bekanntermaßen jeweils zu einem Leimwerk gepumpt, welches die Etiketten beschichtet. Die Überwachung des Leimvorrats erfolgt dann beispielsweise durch Überwachen eines Mindestfüllstands im jeweiligen Behälter / Tank.

Um Produktionsunterbrechungen zu vermeiden, muss der Bedarf für Leimnachschub in den Etikettenspeicher rechtzeitig erkannt werden. Hierfür kontrollieren Bediener den Leimspeicher beispielsweise regelmäßig vor Ort, und/oder es werden Warnmeldungen ausgegeben, wenn eine bestimmte Reservemenge an Leim unterschritten wird.

Aus der DE 10 2008 049 830 A1 ist es zudem bekannt, den Leimverbrauch durch wiederholtes Wiegen eines Leimbehälters im Produktionsbetrieb zu ermitteln und bei bekannter Anzahl der damit versorgten Etiketten einen flächenspezifischen Leimverbrauch zu berechnen. Dieser kann dann zur Beurteilung verschiedener Produktionsaspekte verwendet und zur Produktionsoptimierung oder Korrektur unerwünschter Sollwertabweichungen gezielt verändert werden.

Nachteilig ist jedoch weiterhin, dass in Abfüllanlagen für Behälter meist mehrere Behandlungsmaschinen und/oder Aggregate mit zugeordneten Verbrauchsmittelspeichern für beispielsweise Leim, Etiketten, Folien, CO₂ oder dergleichen zu überwachen sind. Es kann dann vorkommen, dass mehrere Signale / Warnmeldungen und davon ausgelöste Bedienschritte zeitlich zusammenfallen und/oder die jeweils zur Verfügung stehenden Reaktionszeiten ungenügend sind. Dies kann Produktionsunterbrechungen und einen unerwünscht hohen Personalbedarf verursachen.

Es besteht daher Bedarf für demgegenüber verbesserte Verfahren und Vorrichtungen zur Produktionsüberwachung einer Etikettiermaschine.

Die gestellte Aufgabe wird mit einem Verfahren nach Anspruch 1 und mit einer Vorrichtung nach Anspruch 9 gelöst. Vorteilhafte Ausführungsformen sind in den Unteransprüchen angegeben.

Die laufende Ausgabe einer prognostizierten Restlaufzeit erleichtert eine kontinuierliche Produktionsplanung und ermöglicht einen effizienten Personaleinsatz für den erforderlichen Nachschub von Verbrauchsmaterialien.

Besonders vorteilhaft ist eine gleichzeitige Überwachung von wenigstens zwei Verbrauchsmaterialien insbesondere an mehreren Etikettieraggregaten der Etikettiermaschine, beispielsweise des jeweiligen Etiketten- und Leimvorrats.

Es kann dann beispielsweise übersichtlich angezeigt werden, welches Verbrauchsmaterial zuerst nachzufüllen ist. Ebenso kann abgeschätzt werden, wann dies erforderlich sein wird, und ob gegebenenfalls mehrere Bedienereingriffe zum Nachschub von Verbrauchsmaterial zeitlich überlappen können.

Dies wird durch fortlaufende graduelle Überwachung wenigstens eines in der Etikettiermaschine fortlaufend verfügbaren Verbrauchsmaterialvorrats ermöglicht, im Gegensatz zu einer bloßen Überwachung dahingehend, ob eine Reserveschwelle unterschritten wird. Somit können zeitliche Verläufe der Füllzustände der jeweiligen Verbrauchsmittelspeicher ermittelt und auf dieser Grundlage prognostiziert werden, wann der jeweils maschinell / automatisch am jeweiligen Aggregat entnehmbare Vorrat eines bestimmten Verbrauchsmittels bei Produktion mit einer bestimmten Maschinenleistung erschöpft sein wird.

Unter den beschriebenen laufenden oder fortlaufenden Vorgängen wie Messung, Berechnung und Datenausgabe ist zu verstehen, dass sich diese regelmäßig wiederholen im Sinne einer kontinuierlichen oder quasikontinuierlichen Überwachung, beispielsweise im Gegensatz zu Stichproben, und insbesondere keine Unterbrechung / Verlangsamung des Produktionsablaufs erfordern.

Zur Ermittlung des Füllzustands des Leimspeichers wird vorzugsweise der Füllstand des Leims (Heißleim) in einem diesen in geschmolzener Form aufnehmenden und permanent befestigten Leimtank laufend mittels kapazitivem Sensor gemessen. Oder man misst den Füllstand des Leims (Kaltleim) in einem zur laufenden Leimentnahme in den Leimspeicher eingesetzten Leimbehälter laufend berührungslos mittels Abstandssensor. Insbesondere berechnet man dann laufend den Füllzustand anhand eines gespeicherten Querschnittsprofils des eingesetzten Leimbehälters und des darin gemessenen Füllstands.

Die Ermittlung des Füllzustands kann aber auch auf anderen Messverfahren beruhen, beispielsweise auf laufendem Wiegen des Leimtanks / Leimbehälters, interner Kameraüberwachung, nachgeschalteter Durchflussmessung und/oder laufender Füllstandmessung mittels Schwimmer oder dergleichen.

Ferner kann man einen spezifischen Leimverbrauch insbesondere pro Etikett oder pro Flächeneinheit anhand einer über einen gleitenden Produktionszeitraum gemessenen Abnahme des Füllstands im Leimspeicher und der über den Produktionszeitraum gemittelten mittleren Maschinenleistung berechnen und auf der Grundlage der gleitenden Messung und Mittelung laufend aktualisiert ausgeben.

Eine derartige Ermittlung des Leimverbrauchs erfordert nur relativ geringen apparativen Aufwand und bietet sich besonders für eine relativ träge bzw. zeitlich mittelnde Überwachung des Leimverbrauchs an.

Prinzipiell wäre es aber auch denkbar, den Leimverbrauch direkt am beschichteten Etikett mittels Kameraüberwachung zu ermitteln. Ebenso ist dies prinzipiell mittels einer Leim-Durchflussmessung im Etikettieraggregat oder einer Leim-Dickenmessungen am Etikett möglich, beispielsweise indem die Leitfähigkeit des Etiketts gemessen wird. Eine derartige Ermittlung des Leimverbrauchs ist zwar apparativ aufwändiger, ermöglicht aber eine flinkere und gegebenenfalls auch genauere bzw. weniger fehleranfällige Überwachung des Leimverbrauchs als die Füllstandmessung.

Verlässt der jeweils ermittelte spezifische Leimverbrauch einen dafür vorgegebenen Sollbereich (Gut-Fenster), kann eine Warnmeldung oder Fehlermeldungen ausgegeben und/oder eine Maschinenreaktion automatisch ausgelöst werden, beispielsweise Anhalten der Etikettiermaschine oder deren selbstständiges Nachregeln.

Ein bevorzugte Ausführungsform der Erfindung ist zeichnerisch dargestellt: Es zeigen:
Fig. 1 eine schematische Darstellung der Etikettiermaschine und des Überwachungssystems; und
Fig. 2 ein Schema mit Datenströmen und Datenausgabe.

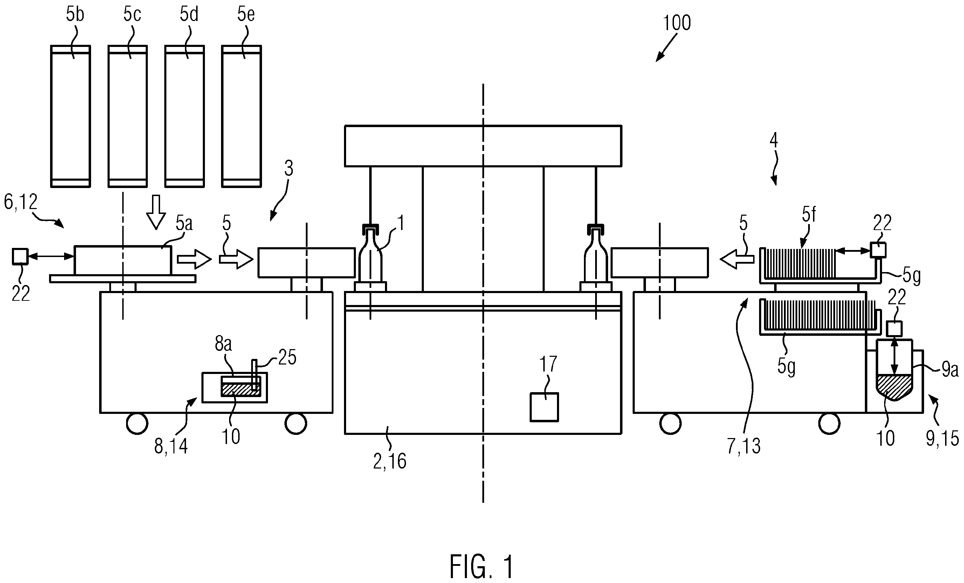

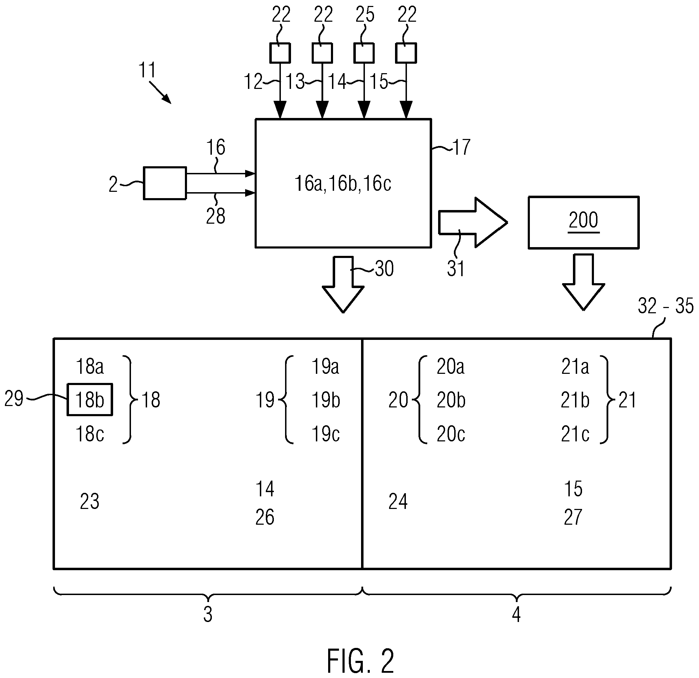

Wie die Fig. 1 und 2 erkennen lassen, umfasst die zu überwachende Etikettiermaschine 100 zur Etikettierung von Behältern 1, wie beispielsweise Glasflaschen, Kunststoffflaschen, Pulpeflaschen, Metalldosen, Kunststoffbecher oder dergleichen, ein vorzugsweise als Karussell ausgebildetes Transportmittel 2 zur fortlaufenden Bereitstellung der Behälter 1 im Sinne eines kontinuierlichen Produktstroms und wenigstens ein in der Peripherie des Transportmittels 2 angeordnetes / angedocktes Etikettieraggregat 3, 4 zum Anbringen von Etiketten 5 an den Behältern 1.

Das Transportmittel 2 umfasst hierzu prinzipiell bekannte Drehaufnahmen (lediglich schematisch angedeutet) für die Behälter 1, um diese bei der Etikettierung geeignet zu positionieren.

Beispielhaft ist hier lediglich zum besseren Verständnis ein erstes Etikettieraggregat 3 als Heißleimaggregat und ein zweites Etikettieraggregat 4 als Kaltleimaggregat an derselben Etikettiermaschine 100 dargestellt.

Das erste Etikettieraggregat 3 umfasst beispielsweise einen ersten Etikettenspeicher 6 zur fortlaufenden Bereitstellung der Etiketten 5 für deren Übergabe an die Behälter 1, das zweite Etikettieraggregat beispielsweise eine entsprechend fungierenden zweiten Etikettenspeicher 7.

Ferner ist dem ersten Etikettieraggregat 3 beispielsweise ein erster Leimspeicher 8 zugeordnet zur fortlaufenden Bereitstellung von Leim 10, der im ersten Etikettieraggregat 3 auf die Etiketten 5 zu deren Befestigung an den Behältern 1 aufgetragen wird. Dem zweiten Etikettieraggregat 4 ist beispielsweise ein entsprechend fungierender zweiter Leimspeicher 9 zugeordnet.

Der erste Etikettenspeicher 6 stellt die Etiketten 5 beispielsweise zusammenhängend in Form von Etikettenrollen 5a - 5e fortlaufend bereit. Die Vereinzelung der Etiketten 5 erfolgt dann im ersten Etikettieraggregat 3 auf prinzipiell bekannte Weise.

Der erste Etikettenspeicher 6 kann in das erste Etikettieraggregat 3 integriert sein, beispielsweise auf bekannte Weise mit zwei abwechselnd nebeneinander laufenden Etikettenrollen 5a, 5b (nur für die Etikettenrolle 5a dargestellt). Alternativ kann der erste Etikettenspeicher 6 als separater Rollenwechsler (sogenanntes Multireel-System) mit einer Vielzahl darin vorgehaltener und automatisch wechselbarer Etikettenrollen 5a - 5e ausgebildet und über eine Pufferstrecke für die abgespulten Etikettenbänder auf prinzipiell bekannte Weise an das erste Etikettieraggregat 3 angebunden sein (nur schematisch angedeutet).

Der erste Leimspeicher 8 umfasst beispielsweise einen Leimtank 8a, in welchem der Leim 10 in geschmolzener Form vorliegt. Der Leimtank 8a kann hierfür beispielsweise eine separate Entnahmekammer für den geschmolzenen Leim 10 und eine vorgeschaltete Aufschmelz- und Vorratskammer umfassen (nicht dargestellt).

Der zweite Etikettenspeicher 7 stellt die Etiketten 5 beispielsweise vereinzelt in Form von Etikettenstapeln 5f in wechselbaren Vorratsbehältern 5g, wie beispielsweise Kassetten oder Wannen, zur fortlaufenden Etikettenentnahme bereit.

Der zugehörige Leim 10 wird dann beispielsweise in einem in den zweiten Leimspeicher 9 wechselbar einsetzbaren Leimbehälter 9a, beispielsweise einem Leimeimer, bei Raumtemperatur zur prinzipiell bekannten laufenden Entnahme vorgehalten.

Die Leimspeicher 8, 9 sind über (nicht dargestellte) Leitungen und Pumpen auf prinzipiell bekannte Weise in die Etikettieraggregate 3, 4 eingebunden.

Die gemeinsame Darstellung von Heißleimaggregat und Kaltleimaggregat sowie unterschiedlicher Typen von Etikettenspeichern 6, 7 und Leimspeichern 8, 9 dient hier lediglich dem besseren Verständnis der beschriebenen Mengenüberwachung von Verbrauchsmaterialien der Etikettierung, hier der Etiketten 5 und des Leims 10.

Hierfür umfasst die Etikettiermaschine 100 ein elektronisches Überwachungssystem 11. Dieses dient der Produktionsüberwachung mittels fortlaufender Messung eines jeweils aktuellen Füllzustands 12, 13 des ersten und/oder zweiten Etikettenspeichers 6, 7 und eines jeweils aktuellen Füllzustands 14, 15 des ersten und/oder zweiten Leimspeichers 8, 9. Das Überwachungssystem 11 ist ferner zur laufenden Messung und/oder Auswertung einer aktuellen Maschinenleistung 16 bzw. Transportgeschwindigkeit des Transportmittels 2, des ersten Etikettieraggregats 3 und/oder zweiten Etikettieraggregats 4 ausgebildet. Die Maschinenleistung 16 kann auf prinzipiell bekannte Weise durch Antriebsüberwachung in der Etikettiermaschine 100 erfasst und an das Überwachungssystem 11 übertragen werden.

Das Überwachungssystem 11 umfasst hierzu eine elektronische Auswerteeinheit 17, die programmiert ist, auf der Grundlage der erfassten Maschinenleistung 16 und der Füllzustände 12, 13, 14, 15 eine voraussichtlich mit den Etiketten 5 und dem Leim 10 jeweils mögliche Restlaufzeit 18, 19, 20, 21 des ersten und zweiten Etikettieraggregats 3, 4 im Sinne einer jeweiligen maximalen Restproduktionsdauer zu berechnen und auszugeben.

Die Restlaufzeiten 18 - 21 sind jeweils aggregatspezifisch, verbrauchsmittelspezifisch und leistungsspezifisch.

Die Auswerteeinheit 17 ist in die Etikettiermaschine 100 integriert. Einzelne der beschriebenen Auswerteschritte können aber zumindest anteilig ausgelagert sein, beispielsweise in eine Recheneinheit, die Bestandteil eines maschinenübergreifenden Überwachungssystems 200 (sog. Watchdog) ist und dann auf prinzipiell bekannte Weise zum Datenaustausch mit der Etikettiermaschine 100 verbunden ist.

Unter einer Ausgabe der Restlaufzeit 18, 19, 20, 21 ist hier zu verstehen, dass wenigstens ein leistungsspezifischer Prognosewert 18a - 18c, 19a - 19c, 20a - 20c, 21a - 21c der Restlaufzeit 18 - 21, der jeweils einem bestimmten angenommenen weiteren Verlauf 16a, 16b, 16c der Maschinenleistung 16 zugeordnet ist, für das jeweilige Verbrauchsmaterial, hier die Etiketten 5 und der Leim 10, an der Etikettiermaschine 100 angezeigt und/oder von dieser in einem geeigneten Datenformat zum externen Abruf beispielsweise mittels Smartphone oder Smartwatch bereitgestellt wird.

Erste leistungsspezifische Prognosewerte 18a, 19a, 20a, 21 a der Restlaufzeiten 18 - 21 können beispielsweise für eine maximale Maschinenleistung 16, also einen ersten weiteren Verlauf 16a, berechnet ausgegeben werden. Entsprechende zweite leistungsspezifische Prognosewerte 18b, 19b, 20b, 21b können beispielsweise für eine jeweils aktuell herrschende Maschinenleistung 16, also einen zweiten weiteren Verlauf 16b, berechnet und ausgegeben werden. Entsprechende dritte leistungsspezifische Prognosewerte 18c, 19c, 20c, 21c können für eine mittlere Maschinenleistung 16, also einen dritten weiteren Verlauf 16c, berechnet und ausgegeben werden. Letzteres erfolgt vorzugsweise auf der Grundlage eines gleitenden Mittelwerts der gemessenen Maschinenleistung 16, beispielsweise gemittelt über die jeweils letzte Produktionsstunde.

Der Füllzustand 12 des ersten Etikettenspeichers 6 kann beispielsweise von einem mittels Ultraschall oder Laserlicht berührungslos arbeitenden Abstandssensor 22 ermittelt werden, insbesondere durch Abstandsmessung zum Umfang der jeweils verwendeten Etikettenrolle 5a hin. Alternativ dazu oder ergänzend kann der Abstandssensor 22 auch in Form einer Kamera, beispielsweise als 3D-Kamera, ausgebildet sein oder induktiv oder anderweitig optisch abtastend arbeiten. Gegebenenfalls kann zudem die Anzahl für einen automatischen Nachschub bereitstehender voller Etikettenrollen 5b - 5e ermittelt werden. Auch dies ist beispielsweise berührungslos mittels Ultraschall oder auch mittels Laserdetektion möglich (nicht dargestellt).

Aus dem gemessenen aktuellen Durchmesser der verwendeten Etikettenrolle 5a kann bei bekannter Etikettendicke und bei bekannter Etikettenanzahl je voller Etikettenrolle 5b - 5e die insgesamt ohne Bedienereingriff jeweils noch am ersten Etikettieraggregat 3 verfügbare Restanzahl 23 von Etiketten 5 ermittelt und für die Berechnung einer ersten Restlaufzeit 18 des ersten Etikettieraggregats 3 verwendet werden. Die Etikettendicke kann während des Produktionsbetriebs laufend neu berechnet werden und ist dann immer als aktueller Ist-Wert bekannt.

Entsprechend kann der Füllzustand 13 des zweiten Etikettenspeichers 7 von einem beispielsweise mittels Ultraschall oder Laserlicht berührungslos arbeitenden Abstandssensor 22 ermittelt werden, insbesondere durch Abstandsmessung zum nachlaufenden Ende des aktuell verwendeten Etikettenstapels 5f hin.

Gegebenenfalls kann zudem die Anzahl der für einen automatischen Nachschub bereitstehenden vollen Vorratsbehälter 5g ermittelt werden. Auch dies ist berührungslos mittels Ultraschall, induktiv, bildgebend, anderweitig optisch oder auch mittels Laserdetektion möglich (nicht dargestellt). Aus der gemessenen aktuellen Dicke des verwendeten Etikettenstapels 5f kann bei bekannter Etikettendicke und bei bekannter Etikettenanzahl pro vollem Vorratsbehälter 5f die insgesamt ohne Bedienereingriff jeweils noch am zweiten Etikettieraggregat4 verfügbare Restanzahl 24 von Etiketten 5 ermittelt und für die Berechnung einer ersten Restlaufzeit 20 des zweiten Etikettieraggregats 4 verwendet werden.

Die in die Berechnung der mit den Etiketten 5 möglichen Restlaufzeiten 18, 20 eingehende Etikettendicke kann als Sortenparameter vorgegeben, laufend gemessen und/oder anhand des laufenden Etikettenverbrauchs berechnet werden.

Der Füllzustand 14 des ersten Leimspeichers 8 kann beispielsweise von einem kapazitiv arbeitenden Füllstandsensor 25 ermittelt werden. Auch Wägezellen und andere Art von Sensoren wären hierfür denkbar.

Der Füllzustand 15 des zweiten Leimspeichers 9 kann beispielsweise von einem mittels Ultraschall berührungslos arbeitenden Abstandssensor 22 ermittelt werden, insbesondere durch Abstandsmessung zur Oberfläche des darunter vorhandenen Leims 10 hin.

Die berührungslos arbeitenden Abstandssensoren 22 und der kapazitive Füllstandsensor 25 sind Bestandteil des beschriebenen Überwachungssystems 11.

Aus dem aktuellen Füllzustand 14, 15 und der diesem entsprechenden Leimmenge kann bei bekanntem spezifischen Leimverbrauch 26, 27, beispielsweise pro Etikett 5, die insgesamt ohne Bedienereingriff mit dem Leim 10 jeweils noch verarbeitbare Anzahl von Etiketten 5 ermittelt und für die Berechnung einer zweiten Restlaufzeit 19 des ersten Etikettieraggregats 3 und einer zweiten Restlaufzeit 21 des zweiten Etikettieraggregats 4 verwendet werden.

Der spezifische Leimverbrauch 26, 27 kann zu Beginn der Produktion jeweils vorgegeben sein und in der laufenden Produktion durch Überwachung der Füllzustände 14, 15 berechnet und dadurch aktualisiert und/oder gemittelt werden. Der spezifische Leimverbrauch 26, 27 kann bekanntermaßen auch pro Flächeneinheit angegeben werden.

Für die Etikettieraggregate 3, 4 können dann entweder sowohl die jeweilige erste Restlaufzeit 18, 19 betreffend den zugeordneten Etikettenvorrat als auch die jeweilige zweite Restlaufzeit 20, 21 betreffend den zugeordneten Leimvorrat ausgegeben bzw. angezeigt werden oder nur die jeweils kürzere Restlaufzeit 18 - 21. Diese Angabe erfolgt prinzipiell in Form wenigstens eines leistungsspezifischen Prognosewerts 18a - 18c, 19a - 19c, 20a - 20c, 21 a - 21c, also für entsprechende angenommene weitere Verläufe 16a - 16c der Maschinenleistung.

Die Fig. 2 verdeutlicht beispielhaft und schematisch die Verarbeitung von Messwerten der Füllzustände 12 - 15 und der Maschinenleistung 16 im Überwachungssystem 11 sowie die darauf basierende Ausgabe von prognostizierten Restlaufzeiten 18 - 21 der Etikettieraggregate 3, 4, von Füllzuständen 14, 15 der Leimspeicher 8, 9, der jeweils insgesamt verfügbaren Restanzahl 23, 24 von Etiketten 5 in den Etikettenspeichern 6, 7 und des jeweiligen spezifischen Leimverbrauchs 26, 27 beispielsweise pro Etikett oder Flächeneinheit.

Die Auswerteeinheit 17 ist hierfür zur Berechnung wenigstens einer Restlaufzeit 18 - 21 programmiert, um anzugeben, wie lange man bei aktuellem Füllzustand 12 -15 und bei einem angenommenen Verlauf, beispielsweise bei einem Mittelwert der Maschinenleistung 16 noch etikettieren kann.

Ferner kann die Auswerteeinheit 17 zur laufenden Ermittlung einer noch zu etikettierenden Restmenge 28 an Behältern 1 programmiert sein. Darauf basierend kann die Auswerteeinheit 17 eine Vorratsprognose 29 berechnen und ausgeben, ob die Füllzustände 12 - 15 zur Etikettierung der Restmenge 28 ausreicht.

Beispielsweise kann angezeigt werden, welches Verbrauchsmaterial an welchem Etikettieraggregat zuerst zu Ende geht. Bei einem bevorstehenden Sortenwechsel kann prognostiziert werden, ob die Verbrauchsmaterialien, insbesondere die Etiketten 5, für die zu produzierende Behältersorte noch ausreicht, entsprechender Nachschub erforderlich ist, oder bereits für die nächste bzw. neue Sorte aufgelegt werden kann.

Hierfür kann eine sortentypisch noch zu etikettierende Restmenge 28 an Behältern 1 auf prinzipiell bekannte Weise laufend aktualisiert und auf dieser Grundlage die Vorratsprognose 29 berechnet und ausgegeben werden. Diese gibt vorzugsweise an, ob der Füllzustand 12, 13 einzelner Etikettenspeicher 6, 7 und gegebenenfalls auch der Füllzustand 14, 15 einzelner Leimspeicher 8, 9 zur Etikettierung der Restmenge 28 ausreicht.

Die Vorratsprognose 29 kann beispielsweise durch farbliche Markierung der jeweiligen Anzeigewerte, beispielsweise der Restlaufzeiten 18 - 21, und/oder durch separaten Hinweis im Sinne einer Warnmeldung und/oder Handlungsempfehlung ausgegeben werden.

Die beschriebene Ausgabe von Messwerten und/oder berechneten Prognosewerten ist zum einen durch deren ortsgebundene Anzeige 30 an der Etikettiermaschine 100 möglich und zum anderen durch deren Datenübertragung 31 an ein maschinenübergreifendes Überwachungssystem 200 zur digitalen ortsunabhängigen Überwachung von Maschinenzuständen (Condition Monitoring Tool / sog. Watchdog), das beispielsweise in einer Daten-Cloud bzw. auf zugehörigen Servern in prinzipiell bekannter Weise ortsunabhängig bereitgestellt wird.

Die beschriebene Ausgabe gemessener und/oder berechneter Werte erfolgt somit in einem zum Datenaustausch mit Anzeigegeräten, wie beispielsweise Touchscreens, und/oder Datenspeichern geeignet standardisierten Datenformat.

Die ortsgebundene Anzeige 30 ist beispielsweise an einem dem Transportmittel 2 bzw. der Grundeinheit der Etikettiermaschine 100 zugeordneten Touchscreen 32 oder anderweitigen Bildschirm möglich, ebenso an einem der Etikettiermaschine 100 insgesamt (nicht dargestellt) oder dem ersten und/oder zweiten Etikettieraggregat 3, 4 zugeordneten Touchscreen 33, 34 oder anderweitigen Bildschirm.

Insbesondere über das maschinenübergreifende Überwachungssystem 200 ist zudem eine Anzeige auf mobilen Endgeräten 35 möglich, beispielsweise auf einem Smartphone oder einer Smartwatch. Prinzipiell wäre auch eine im obigen Sinne ortsgebundene Anzeige 30 auf mobilen Endgräten 35 durch deren Einbindung in die Etikettiermaschine 100 mittels lokal begrenzter Funkverbindung möglich.

Die von der Auswerteeinheit 17 wie beschrieben verarbeiteten Zustands- und/oder Prognosedaten können ständig aktualisiert und so flexibel an Apps, Smartwatches, Watchdog-Systeme oder dergleichen übertragen und dort ständig von Bedienern abgerufen werden. Ebenso können Warnmeldungen bei Unterschreiten einer bestimmten Vorratsreserve oder dergleichen auf Smartwatches oder Smartphones übertragen und von diesen automatisch ausgegeben werden.

In der Fig. 1 ist angedeutet, dass beispielsweise der erste Etikettenspeicher 6 eine Vielzahl von Etikettenrollen 5a - 5e aufnehmen kann, die für den Etikettennachschub automatisch und gegebenenfalls selektiv nachgelegt werden. Derartige Systeme, beispielsweise als Multireel-Systeme bezeichnet, sind üblicherweise durch Pufferstrecken für die abgespulten Etikettenbänder angeschlossen. Für eine Sortenwechsel können die Etiketten 5 der neuen Sorte dann bereits vorab durch solche Pufferstrecken gefahren werden, sodass die Etiketten 5 der neuen Sorte beim Sortenwechsel bereits am jeweiligen Etikettieraggregat 3, 4 anstehen.

Mit dem beschriebenen Überwachungssystem 11 kann beispielsweise wie folgt gearbeitet werden:

Bei Verarbeitung von Heißleim können der Füllzustand 14 (Leimfüllstand) im Leimtank 8a (ggf. Entnahmekammer) des Leimspeichers 8 mittels kapazitivem Füllstandsensor 25 und der Füllzustand 12 im zugehörigen Etikettenspeicher 6 (Etikettenfüllstand) mittels Ultraschallsensoren ermittelt werden. Daraus können die Restlaufzeiten 18, 19 für die noch vorhandenen Etiketten 5 und für den Leim 10 bei wenigstens einer vorausgesetzten Maschinenleistung 16 berechnet werden.

Mit einem kapazitiven Füllstandsensor 25 im jeweiligen Leimtank 8a (ggf. in dessen Entnahmekammer) kann die Füllhöhe des Leims 10 kontinuierlich gemessen / erfasst werden. Die Berechnung der zugehörigen Restlaufzeit 19 kann anhand des so erfassten Leim-Füllstands und vorzugsweise anhand einer durchschnittlichen Maschinenleistung 16 erfolgen. Prognostizierte Daten zu Füllzustand 14 und Restlaufzeit 19 werden beispielsweise auf einem Touchscreen der Etikettiermaschine 100 angezeigt. Zusätzlich ist eine aktualisierte Berechnung und Anzeige des spezifischen Leimverbrauchs 26 beispielsweise pro Etikett 5 und/oder Flächeneinheit möglich.

Ist der erste Etikettenspeicher 6 als eigenständiger Rollenwechsler (Multireel-System) mit mehreren Etikettenrollen 5a - 5e und einer Pufferstrecke zum Etikettieraggregat 3 ausgebildet, umfasst der Füllzustand 12 vorzugsweise sowohl die aktuell verwendete Etikettenrolle 5a, gegebenenfalls zum automatischen Nachschub bereitstehende Etikettenrollen 5b - 5e sowie die auf der Pufferstrecke vorhandenen Etiketten 5.

Die zugehörige Restlaufzeit 18 kann dann auch im Bereich des Multireel-Systems ausgegeben werden. Vorteilhaft ist jedoch eine Anzeige im Bereich des zugeordneten Etikettieraggregats 3 gemeinsam mit der dort für den zugeordneten Leim 10 ermittelten Restlaufzeit 19 oder an der Grundmaschine, also im Bereich des Transportmittels 2, dann vorzugsweise gemeinsam mit weiteren Restlaufzeiten 20, 21 insbesondere alle in diesem Sinne in der Etikettiermaschine 100 gerade verwendeten Verbrauchsmaterialien und Aggregate.

Zur Berechnung und Ausgabe der Restlaufzeiten 18 - 21 und/oder Füllzustände 12 - 15 können die dafür nötigen Daten beispielsweise über eine DMM-Schnittstelle mit einem maschinenübergreifenden Überwachungssystem 200 zur digitalen ortsunabhängigen Überwachung von Maschinenzuständen (Condition Monitoring Tool / Watchdog) ausgetauscht werden.

Der spezifische Leimverbrauch 26, 27 insbesondere pro Etikett 5 könnte auch infolge einer Übermittlung des Füllzustands 14, 15 (Leimfüllstands) mittels eines Algorithmus im digitalen Überwachungssystem 200 (Watchdog) berechnet werden. Hierfür könnten dort zusätzliche Daten eingegeben werden, beispielsweise die Fläche der Etiketten 5, das vertikale Querschnittsprofil des Leimspeichers 8, 9 und/oder die Dichte des Leims 10. In der Fig. 1 ist der eingesetzte Leimbehälter 9a beispielsweise mit einem sich im unteren Bereich verjüngenden Querschnittsprofil dargestellt, welches eine möglichst vollständige Entleerung begünstigt.

Alternativ oder ergänzend kann der spezifische Leimverbrauch 26, 27 aber ebenso in der jeweiligen Aggregatsteuerung, beispielsweise im ersten und/oder zweiten Etikettieraggregat 3, 4, in der (übergeordneten) Maschinensteuerung der Etikettiermaschine 100 oder in einer separaten Steuereinheit (vor Ort) berechnet werden.

Der spezifische Leimverbrauch 26, 27 kann dann anhand von konfigurierbaren Warnschwellen und Alarmschwellen im maschinenübergreifenden Überwachungssystem 200 (Watchdog) überwacht und an geeignete mobile Endgeräte 35 und/oder an wenigstens einen Touchscreen 32 - 34 der Etikettiermaschine 100 zur dortigen Anzeige übermittelt werden. Auch können auf entsprechende Weise Bedieneraufgaben und/oder Handlungsempfehlungen bei Erreichen von Schwellenwerten ausgegeben werden.

Bei Verarbeitung von Kaltleim kann der Füllzustand 15 (Leimfüllstand) im Leimbehälter 9a beispielsweise mittels Ultraschallsensor erfasst werden, der Füllzustand 13 (Etikettenfüllstand) mittels Laserdistanzsensoren. Die beschriebene Restlaufzeit 20, 21 für die Etiketten 5 und den Leim 10 erfolgt dann wieder für wenigstens eine zur weiteren Produktion vorausgesetzte Maschinenleistung 16. Der spezifische Leimverbrauch 27 kann wiederum pro Etikett 5 und/oder pro Flächeneinheit aktualisiert berechnet werden.

Beispielsweise erfasst ein Abstandssensor 22 (Laserdistanzsensor) dann die Dicke des Etikettenstapels 5f im aktuell zur Produktion verwendeten Vorratsbehälter 5g. Für jeden weiteren zum automatischen Nachschub von Etiketten 5 zusätzlich in den Etikettenspeicher 7 einsetzbaren Vorratsbehälter 5g ist dann vorzugsweise je ein weiterer Abstandssensor 22 (beispielsweise Laserdistanzsensor) vorhanden, um die Anzahl gefüllt bereitstehender Vorratsbehälter 5g zu bestimmen und bei der Ermittlung des Füllzustands 13 (Gesamtfüllstand) zu berücksichtigen.

Zur Erfassung des Füllzustands 15 (Leimmenge) und zur Bestimmung des spezifischen Leimverbrauchs 27 kann der Füllstand im Leimbehälter 9a (Leimeimer) von einem vertikal ausgerichteten Ultraschallsensor gemessen werden. Auf der Grundlage eines im Etikettieraggregat 4 hinterlegten Querschnittsprofils (Form) des Leimbehälters 9a kann der Füllzustand 15 im Sinne einer Leimmenge aus dem gemessenen Füllstand berechnet werden. Anhand der Anzahl produzierter Etiketten 5 und der dafür verbrauchten Leimmenge (Gewicht) kann der spezifische Leimverbrauch 27 beispielsweise pro Etikett 5 und normiert pro Flächeneinheit berechnet werden.

Angezeigt werden kann dann beispielsweise: der aktuelle Füllzustand 12, 13 (Etikettenfüllstand) beispielsweise als Relativwert (%) und/oder als Absolutwert (Stückzahl); eine Warnung bei zu geringem Füllstand; eine Fehlermeldung bei fehlerhafter Füllstandmessung; die aktuelle Dicke des Etikettenstapels 5f oder der aktuelle Durchmesser der Etikettenrolle 5a; die gemessene und/oder berechnete Etikettendicke; die Anzahl voller Vorratsbehälter 5g (Kassetten) oder Etikettenrollen 5b - 5e; Restanzahl der Etiketten 5 in aktuell verwendetem Vorratsbehälter 5g (Kassette) oder auf aktuelle verwendeter Etikettenrolle 5a; Restanzahl 23, 24 der Etiketten 5 gesamt; die zugrunde gelegte Maschinenleistung 16 (beispielsweise im Mittel über die letzte Produktionsstunde); und/oder die berechneten Prognosewerte 18a, 18b, 18c, 20a, 20b, 20c der Restlaufzeit 18, 20 bei maximaler, aktueller und mittlerer Maschinenleistung 16.

Angezeigt werden kann dann beispielsweise: der aktuelle Füllzustand 14, 15 (Leimmenge) beispielsweise als Relativwert (%) und/oder als Absolutwert (Volumen und/oder Gewicht); das aktuelle Leimgewicht im Leimbehälter 9a; das aktuelle Leimvolumen im Leimtank 8a oder Leimbehälter 9a; der aktuelle Füllstand (Leimhöhe) im Leimtank 8a oder Leimbehälter 9a; der aktuelle spezifische Leimverbrauch 26, 27, beispielsweise flächenspezifisch, zeitspezifisch und/oder etikettenspezifisch (pro Etikett 5 bzw. pro Transferelement des Etikettieraggregats 4); gemessene mittlere Maschinenleistung der letzten Produktionsstunde; und/oder berechnete Prognosewerte 19a, 19b, 19c 21a, 21b, 21c der Restlaufzeit 19, 21 bei maximaler, aktueller und mittlerer Maschinenleistung 16.

Ferner ist eine Überblickdarstellung an einem zentralen Touchscreen 32 der Etikettiermaschine 100 denkbar mit den wichtigsten Angaben zu den Füllzuständen 12 - 15 und/oder den Restlaufzeiten 18 - 21, insbesondere für alle in der Etikettiermaschine 100 verwendete Verbrauchsmaterialien und für alle damit betriebenen Etikettieraggregate 3, 4.

Hierbei ist es besonders vorteilhaft darzustellen, welches Verbrauchsmaterial als nächstes durch Bedienereingriff nachgefüllt werden muss.

Die beschriebenen Messwerte und Prognosedaten können an eine Daten-Cloud übergeben und dort von mobilen Endgeräten 35 abgerufen und angezeigt werden.

Insbesondere im Zusammenhang mit einem maschinenübergreifenden Überwachungssystem 200 ist es möglich, Warnmeldungen und/oder Handlungsanweisungen für bestimmte Füllzustände 12 - 15 frei zu konfigurieren und bei Erreichen entsprechender Schwellenwerte automatisch auszugeben, beispielsweise das Erreichen von Mindestfüllzuständen und/oder die Aufforderung zum Nachlegen von Etiketten 5 innerhalb einer bestimmten Zeitspanne.

Insbesondere im Zusammenhang mit einem maschinenübergreifenden Überwachungssystem 200 ist es möglich, Fehlermeldungen und/oder Steuerungsaktionen frei vorab zu konfigurieren und bei Erreichen entsprechender Schwellenwerte oder Zustände automatisch auszugeben, beispielsweise das festgestellte Leerlaufen eines Leimbehälters 9a und/oder das benötigte Schlie-ßen einer Flaschensperre.

In entsprechender Weise kann für den spezifischen Leimverbrauch 26, 27 ein Gutfenster im Sinn eines Sollbereichs definiert und bei Verlassen des Gutfensters eine Warnmeldung und/ oder Fehlermeldung ausgegeben sowie eine Maschinenaktion ausgelöst werden.

Ferner kann die aktuelle Güte der Leimverbrauchsberechnung ermittelt und ausgegeben werden. Sind erst wenige Etiketten 5 verarbeitet worden, ist die Berechnung des spezifischen Leimverbrauchs 26, 27 noch relativ ungenau, zugehörige Warnmeldungen gegebenenfalls noch nicht auszugeben und/oder zugehörige Maschinenaktionen gegebenenfalls noch nicht auszulösen. Anzeigewerte können mit einem Hinweis auf geringe Güte versehen werden.

Die Berechnung und Überwachung des spezifischen Leimverbrauchs 26, 27 kann sowohl in der Etikettiermaschine 100 als auch im maschinenübergreifenden Überwachungssystem 200 (Cloud, Watchdog) erfolgen.

Ferner ist die Ausgabe von Information möglich, ob das jeweilige Verbrauchsmaterial (Etiketten 5, Leim 10) für die restliche geplante Produktion reicht, oder wie viel gegebenenfalls zusätzlich noch benötigt wird.

Um den aktuellen volumetrischen Füllzustand 15 in einem Leimbehälter 9a genau auf die beschriebene Weise zu ermitteln, wird die Formgebung der eingesetzten Leimbehälter 9a vorzugsweise in der Etikettiermaschine 100 bzw. im Etikettieraggregat 4 parametriert, beispielsweise der vertikale Verlauf des Innendurchmessers des jeweiligen Leimbehälters 9a. Hierfür können als Sortenparameter unterschiedliche Leimbehälter 9a definiert werden. Dadurch können beispielsweise Leimbehälter 9a unterschiedlicher Hersteller samt zugehörigem Querschnittsprofil durch Anwender angewählt und automatisch bei der beschriebenen Berechnung berücksichtigt werden.

Prinzipiell könnten bestimmten gemessenen Füllständen auch sortentypische Füllzustände 15 im Sinne von jeweiligen Restleimmengen auf der Grundlage sortentypisch ermittelter und abgespeicherter Erfahrungswerte zugeordnet werden, die zuvor in Testläufen und/oder Produktionsläufen mit dem aktuell zur Produktion eingesetzten Format des Leimbehälters 9a gewonnen wurden.

Zur Bestimmung der für die Berechnung verwendeten Etikettendicke kann die Auswerteeinheit 17 anfangs auf Sollwerte / Herstellerwerte oder dergleichen Default-Werte zurückgreifen. Im weiteren Produktionsbetrieb wird die tatsächliche Etikettendicke vorzugsweise aus dem Etikettenverbrauch und der Änderung gemessener Rollendurchmesser oder Stapeldicken berechnet.

Die voranstehende Beschreibung des Verfahrens und der Etikettiermaschine 100 beruht der Übersichtlichkeit halber auf zwei unterschiedlichen Etikettieraggregaten 3, 4. Es versteht sich, dass die Anzahl verwendeter Etikettieraggregate davon abweichen kann und/oder in der Regel Etikettieraggregate 3, 4 vom selben Typ in der Etikettiermaschine 100 angeordnet werden.

## Patentansprüche

1. Verfahren zur Produktionsüberwachung einer Etikettiermaschine (100), die ein Transportmittel (2) zur laufenden Bereitstellung von Behältern (1), wenigstens ein Etikettieraggregat (3, 4) zur Übergabe von Etiketten (5) an die Behälter und wenigstens einen Leimspeicher (8, 9) zur laufenden Bereitstellung von Leim (10) zur Befestigung der Etiketten an den Behältern umfasst, wobei man den Füllzustand (14, 15) des Leimspeichers laufend misst und eine Maschinenleistung (16) des Transportmittels (2) und/oder des Etikettieraggregats (3, 4) laufend misst und auf dieser Grundlage wenigstens eine Restlaufzeit (19, 21) berechnet und ausgibt, die angibt, wie lange man mit dem Füllzustand (14, 15) bei einem angenommenen weiteren Verlauf (16a - 16c) der Maschinenleistung (16) noch etikettieren kann.

2. Verfahren nach Anspruch 1, wobei man ferner den Füllzustand (12, 13) wenigstens eines Etikettenspeichers (6, 7) zur laufenden Bereitstellung der Etiketten (5) für deren Übergabe an die Behälter (1) laufend misst und wenigstens eine zugehörige Restlaufzeit (18, 20) berechnet und ausgibt, die angibt, wie lange man mit dem Füllzustand (12, 13) des Etikettenspeichers (6, 7) bei einem angenommenen weiteren Verlauf (16a - 16c) der Maschinenleistung (16) noch etikettieren kann.

3. Verfahren nach Anspruch 2, wobei man ferner berechnet und ausgibt, welcher der Etikettenspeicher (6, 7) und Leimspeicher (8, 9) die geringste Restlaufzeit (18 - 21) aufweist und/oder zuerst nachgefüllt werden muss.

4. Verfahren nach einem der vorigen Ansprüche, wobei man ferner eine insbesondere sortentypisch noch zu etikettierende Restmenge (28) an Behältern (1) laufend ermittelt und auf dieser Grundlage eine Vorratsprognose (29) berechnet und ausgibt, die angibt, ob der Füllzustand (12 - 15) zur Etikettierung der Restmenge (28) ausreicht.

5. Verfahren nach wenigstens einem der vorigen Ansprüche, wobei die Ausgabe wenigstens der Restlaufzeit (18 - 21) durch deren ortsgebundene Anzeige (30) an der Etikettiermaschine (100) und/oder durch Datenübertragung (31) an ein maschinenübergreifendes Überwachungssystem (200) zur digitalen ortsunabhängigen Überwachung von Maschinenzuständen erfolgt, insbesondere einschließlich Datenübertragung und Anzeige an mobilen Endgeräten (35).

6. Verfahren nach wenigstens einem der vorigen Ansprüche, wobei man zur Ermittlung des Füllzustands (14, 15) des Leimspeichers (8, 9): den Füllstand des Leims (10) in einem diesen in geschmolzener Form aufnehmenden und permanent befestigten Leimtank (8a) laufend mittels kapazitivem Sensor (25) misst; oder den Füllstand des Leims (10) in einem zur laufenden Leimentnahme in den Leimspeicher (9) eingesetzten Leimbehälter (9a) laufend berührungslos mittels Abstandssensor (22) misst und den Füllzustand (15) anhand eines gespeicherten Querschnittsprofils des Leimbehälters und des darin gemessenen Füllstands laufend berechnet.

7. Verfahren nach Anspruch 6, wobei man einen spezifischen Leimverbrauch (26, 27) insbesondere pro Etikett (5) oder pro Flächeneinheit anhand einer über einen gleitenden Produktionszeitraum gemessenen Abnahme des Füllstands im Leimspeicher (8, 9) und der über den Produktionszeitraum gemittelten mittleren Maschinenleistung (16) berechnet und auf der Grundlage der gleitenden Messung und Mittelung laufend aktualisiert ausgibt.

8. Verfahren nach wenigstens einem der vorigen Ansprüche, wobei man wenigstens die Restlaufzeiten (18 - 21) für sämtliche an der Etikettiermaschine (100) laufenden Etikettieraggregate (3, 4) auf einem dem Transportmittel (2) zugeordneten zentralen Touchscreen (32) oder anderweitigen zentral zugeordneten Bildschirm anzeigt.

9. Etikettiermaschine (100) zur Etikettierung von Behältern (1), umfassend: ein Transportmittel (2) zur laufenden Bereitstellung der Behälter; wenigstens ein Etikettieraggregat (3, 4) zum Anbringen von Etiketten (5) an den Behältern; und wenigstens einen Leimspeicher (8, 9) zur laufenden Bereitstellung von Leim (10) zum Anbringen der Etiketten an den Behältern; und ein Überwachungssystem (11) zur Produktionsüberwachung der Etikettiermaschine insbesondere gemäß dem Verfahren nach wenigstens einem der vorigen Ansprüche, wobei das Überwachungssystem zur laufenden Messung des Füllzustands (14, 15) des Leimspeichers und zur laufenden Messung der Maschinenleistung (16) des Transportmittels und/oder des Etikettieraggregats ausgebildet sowie zur darauf basierenden Berechnung und Ausgabe wenigstens einer zugeordneten Restlaufzeit (19, 21) programmiert ist, um anzugeben, wie lange man mit dem Füllzustand (14, 15) bei einem angenommenen weiteren Verlauf (16a - 16c) der Maschinenleistung noch etikettieren kann.

10. Etikettiermaschine nach Anspruch 9, ferner umfassend wenigstens einen Etikettenspeicher (5, 6) zur laufenden Bereitstellung der Etiketten (5) zu deren Übergabe an die Behälter (1), wobei das Überwachungssystem (11) ferner zur laufenden Messung eines Füllzustands (12, 13) des Etikettenspeichers ausgebildet sowie zur darauf basierenden Berechnung und Ausgabe wenigstens einer zugeordneten Restproduktionsdauer (18, 20) programmiert ist, um anzugeben, wie lange man mit dem Füllzustand (12, 13) des Etikettenspeichers (5, 6) bei einem angenommenen weiteren Verlauf (16a - 16c) der Maschinenleistung noch etikettieren kann.

11. Etikettiermaschine nach Anspruch 9 oder 10, wobei das Überwachungssystem (11) ferner zur Ermittlung einer insbesondere sortentypisch noch zu etikettierenden Restmenge (28) an Behältern (1) ausgebildet sowie dazu programmiert ist, auf dieser Grundlage eine Vorratsprognose (29) zu berechnen und auszugeben, die angibt, ob der Füllzustand (12 - 15) zur Etikettierung der Restmenge (28) ausreicht.

12. Etikettiermaschine nach wenigstens einem der Ansprüche 9 bis 11, wobei die Etikettiermaschine (100) wenigstens einen Touchscreen (32 - 34) zur ortsgebundenen Anzeige (30) wenigstens der Restlaufzeit (18 - 21) umfasst und/oder das Überwachungssystem (11) zur Datenübertragung (31) wenigstens der Restlaufzeit (18 - 21) an ein maschinenübergreifendes Überwachungssystem (200) zur digitalen ortsunabhängigen Überwachung von Maschinenzuständen ausgebildet ist.

13. Etikettiermaschine nach wenigstens einem der Ansprüche 9 bis 12, wobei der Leimspeicher (8) einen kapazitiven Sensor (25) zur Füllstandmessung in einem Leimtank (8a) zur Entnahme geschmolzenen Leims (10) umfasst.

14. Etikettiermaschine nach wenigstens einem der Ansprüche 9 bis 12, wobei der Leimspeicher (9) einen berührungslos mittels Ultraschall oder Laserlicht arbeitenden Abstandssensor (22) zur Füllstandmessung in einem zum Leimnachschub auswechselbaren Leimbehälter (9a) umfasst, und wobei das Überwachungssystem (11) zur Speicherung und/oder zum Abruf sortentypischer Querschnittsprofile von Leimbehältern ausgebildet ist, um den Füllzustand (15) anhand des Querschnittsprofils des eingesetzten Leimbehälters (9a) und des darin gemessenen Füllstands zu berechnen.
